# EUROPEAN PATENT APPLICATION

(11) **EP 1 713 199 A1**
(43) Date of publication of application: **18.10.2006**
(21) Application number: 06300149.9
(22) Date of filing: 20.02.2006
(51) Int. Cl.: H04L 12/18

(54) **Architecture for provisioning broadcast services over managed multicast virtual private LAN trees**

(30) Priority: 18.02.2005 US 60465
(71) Applicant: ALCATEL, 75008 Paris (FR)
(72) Inventor: Bou-Diab, Bashar Said, Ottawa Ontario K1S 2M3 (CA); Raahemi, Bijan, Ottawa Ontario K1S 1R1 (CA)
(74) Representative: Hervouet, Sylvie

(57) **Abstract**

Methods, tools, and a multicast connectivity architecture are provided for provisioning bundled high bandwidth multi-channel multimedia broadcast services over a packet switched communications network. Multicast group membership join/prune requests generated by the destination network nodes are processed on edge. Multicast tree connectivity in the core of the communications network is static and centrally provisioned based on multicast group member edge network nodes associated with subscribers, while dynamic multicasting techniques are employed over the distribution portion of the service provider's communications network to deliver requested content to each destination network node. The methods and tools compute multicast trees, configure on-tree branching network nodes, and establish Virtual Private LAN network overlays for channel bundles to convey multi-channel content in the core of the managed communications network between edge network nodes. Centralized multicast tree provisioning enables the use of efficient multicast tree topologies, while VPLS packet transport provides interoperability between disparate Layer-2 packet transport technologies employed in different portions of the communications network.

## Description

### Field of the invention

The invention relates to high bandwidth broadcast data communications, and in particular to packet switched communications network architectures for distributing high bandwidth broadcast audio/video content.

### Background of the invention

Trends in the field of communications lead towards the provision of television broadcast services over data communications networks, and in particular over packet switched communications networks. This requires convergence between television content broadcast technologies and packet transport technologies.

Current developments related to content broadcasting, have largely concentrated on provisioning low bandwidth streaming services over packet switched communication networks. Such recent developments concern the efficient transport of relatively low bandwidth audio streams end-to-end between communication network nodes. The most notable developments for the purposes of the present description, relate to means for distributing an audio stream generated by a single source network node to multiple listening destination network nodes. The following represent current developments concerning streaming audio content distribution over packet switched communications networks:

In order to provide content broadcasting, connectivity is provided today via multiple unicast (point-to-point) connections between a source network node and destination network nodes. Although a multicast connection from a source network node to multiple destination network nodes provides a more efficient transport facility than the multiple unicast connections typically used today, multicast connectivity is not widely adopted due to the lack of multicast management and billing capabilities.

In a multicast connection, the constituent links form what is know as a multicast tree. The most generic multicast tree provides many-to-many connectivity, known as anycast, enabling every network node registered with a corresponding multicast group to communicate with every other network node registered in the same multicast group. However, unidirectional media content distribution, such as internet radio broadcast service provisioning requires a one-to-many connectivity, known as single-source multicasting. Broadcasting an media channel over a packet switched communications may be accomplished by a media source announcing to the network the existence of a multicast group and the prospective listening destination network nodes joining in.

A multitude of multicast tree variants, such as: Shortest Path Source Tree (SPT), Core-Based Tree (CBT), and Steiner Tree (ST) have been studied, while only some of these multicast tree variants have been deployed with various degrees of success in provisioning audio streaming services.

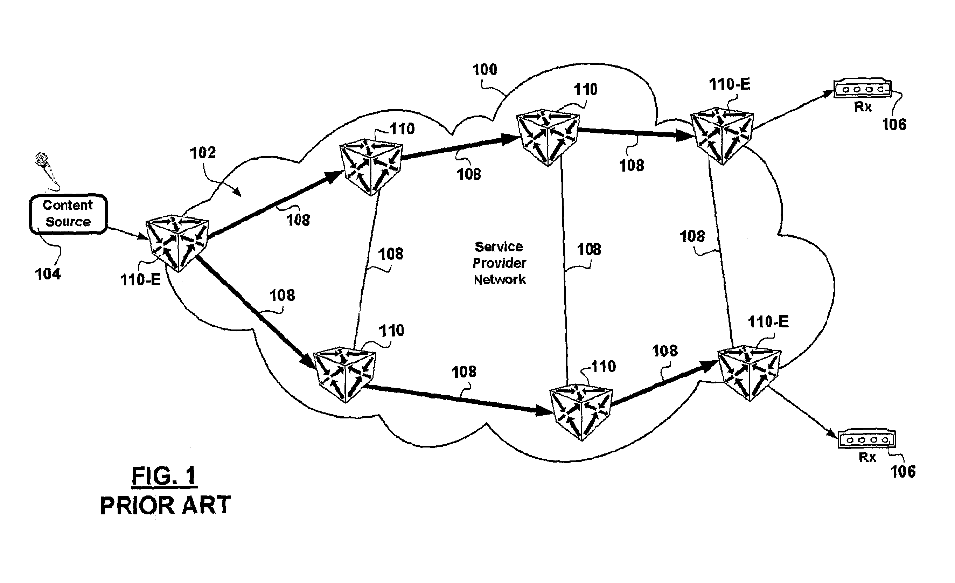

As exemplary illustrated in FIG. 1, an exemplary SPT multicast tree 102, provisioned in an exemplary provider communications network 100, includes shortest path branches (heavy arrows) between the content source network node 104 and destination network nodes 106. To achieve connectivity, six physical links 108 (heavy arrows) interconnecting participating router data network nodes 110 are utilized in the service provider's network 100. The SPT tree is the most popular connectivity architecture for intra-domain and inter-domain multicast routing and is being used by Open Systems Interconnect (OSI) Layer-3 multicast routing protocols such as: PIM (Protocol Independent Multicast), MOSPPF (Multicast Open Shortest Path First), etc. for low-bandwidth audio streaming service provisioning (such as audio media).

A CBT multicast tree stems from a designated root core router network node; the multicast tree branches representing shortest paths form the root core router network node to network nodes participating in the same multicast group. CBT trees have limited application to and are best suited for inter-domain multicast routing.

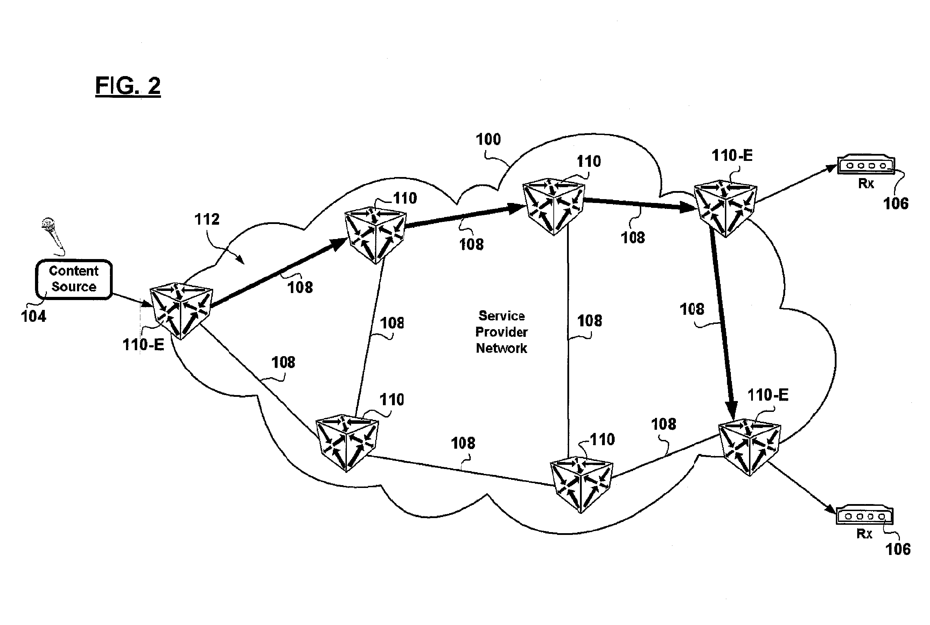

A Steiner multicast tree provides a theoretical minimum cost multicast connectivity that could be established given a network topology. Finding the Steiner multicast tree, given a network topology and a subset of destination multicast group members, is an "NP-complete" problem, however heuristics have been proposed to find a constrained Steiner tree in polynomial time. FIG. 2 shows a theoretical deployment of the same exemplary service employing the same network architecture as shown in FIG. 1, however multicast connectivity is theoretically provisioned employing a Steiner multicast tree 112. It is apparent from FIG. 2 that only four interconnecting links 108 (heavy arrows) would be necessary in the service provider's network 100 to provision multicast connectivity between the same participating network nodes 104/106, thereby requiring the utilization of significantly less resources in the provider communications network. Utilizing less resources is a desirable characteristic of provisioned services employing Steiner multicast trees, especially when considering that typical deployment scenarios include many edge network nodes 110-E participating in a multicast group.

It is expected that a long (multi-second) delay may be incurred in accessing a live internet radio broadcast service and receiving a live internet radio stream broadcasted over a packet switched communication network using today's multicast group membership management scheme. The long delay is incurred: as a new join request to the multicast group propagates from the requesting destination network node 106 towards the source network node 104, as the join request is being processed by network nodes provisioning the multicast tree, and as a new multicast tree branch is being provisioned to the requesting destination network node 106. It is also possible that a similar delay can be incurred when tuning to a new station in operating an Internet radio.

Developments towards video broadcast over packet switched communication networks include Source Specific Multicast (SSM) techniques which may be employed in connecting a single video content source to multiple receiver network nodes. SSM techniques mirror the above mentioned audio stream broadcasting techniques in broadcasting video content from a single video stream source and may incur long access delays. Access delays to a high bandwidth video stream can be particularly long in a multi-hop distribution network. The main cause of the long access delay is the time taken by a join request to travel from the requesting destination network node to a network node participating in the provisioning of the multicast tree and the time taken to process the join request. In processing a join request not only does a new branch of the multicast tree has to be provisioned to the requesting network node, but the new branch having sufficient bandwidth to convey the audio/video content of the single channel has to be found in real-time.

However, internet broadcast TV services require effective delivery of video content from multiple video content channel sources to multiple channel subscribers. The above mentioned streaming content distribution scenarios are difficult to extend to provision internet broadcast TV services. Difficulties exist in provisioning high bandwidth internet broadcast TV services over packet switched communication networks considering the expectation of the user of such services to channel surf.

No successful large scale internet broadcast TV service deployment is known to date. Currently Protocol Independent Multicast/Source Specific Multicast (PIM-SSM) and MPLS Multicast Tree (MMT) are being investigated as potentially viable technologies, both of which are at the proposal stage. These proposals ignore the multi-channel aspect of broadcast TV, and concentrate on channel-by-channel content distribution wherein each multicast group is defined on a per channel basis. PIM-SSM requires that each channel change event include a prune request sent to the nearest branching node of the multicast tree provisioning the currently received channel, and a join request sent to the nearest node on the multicast tree provisioning the new channel. MMT on the other hand requires that the prune and join requests of each channel change event be sent to a Network Information Management System (NIMS) for processing. The above two mentioned proposals do not address bandwidth search delays. PIM-SSM attempts to minimize packet transmission delay from the source network node to the destination network nodes and MMT attempts to reduce multicast group membership state tracking at participating network nodes.

Both proposals are based on Open Systems Interconnect Layer-3 Internet Protocol Multicast protocol (IP Multicast) which specifies the details of the operation of router communications network nodes required to provision multicast tree connectivity. Recent trends, reflected in the IP Multicast protocol, have led to intelligent networks wherein the aggregate operation of individual network nodes is employed to provision network wide services. Relevant advantages of IP Multicast intelligent networking include the fact that router network nodes cooperate to provision simple, not necessarily efficient, multicast trees without outside intervention, and to re-route traffic around failed infrastructure without outside intervention. However advantages of intelligent networking may be only be derived to the extent to which router network node specific solutions can be found such that desired aggregate results are achievable.

For example, in order to compute multicast trees, information about other participating network nodes, about interconnecting links, and multicast group membership information needs to be taken into account. The provision of a large number of multicast services via a larger number of multicast groups for content delivery to an even larger number of destination network nodes requires a huge amount of information to be tracked at each participating network node. Therefore only the simplest of multicast trees, such as SPT and CBT, can be implemented based only on information about neighboring router network nodes, interconnecting links therebetween, and multicast group membership information. It is understood that provisioning a Steiner tree for internet broadcast TV services in accordance with intelligent networking goals, not only is it required that every router network node track information about every network node and every interconnecting link in the communications network in which connectivity is provisioned, but tracking complete subscription information in respect of each channel is also required. Although employing a Steiner tree would guarantee minimal transport bandwidth / packet processing resource utilization, the bandwidth required to autonomously track and store, network wide resource utilization and complete channel subscription information at each router network node prohibits the use of Steiner trees in accordance with intelligent networking goals. The information tracked by each router network node to provision a multicast tree is generically referred to as multicast forwarding state information.

The PIM-SSM proposal is published by the Internet Engineering Task Force (IETF) as draft-ietf-ssm-arch-06.txt and is included herein by reference. PIM-SSM uses IP Multicast and a dynamic SPT that is recomputed with subscriber membership changes. PIM-SSM addresses storage requirements at each router network node on a multicast tree. In summary, PIM-SSM proposes tracking at each router network node only two levels of multicast forwarding state information regarding: the parent router network node and the children router network nodes of the multicast tree for each channel provisioned via the router network node. As PIM-SSM requires per-channel multicast forwarding state information stored in each network node employed in provisioning the multicast connectivity, the memory storage requirement scales linearly with the numb er of channels provisioned and is not therefore scalable for a large number of channels. Moreover PIM-SSM still incurs an unacceptable delay in executing subscriber membership change requests in large multi-hop distribution networks as explained herein above.

The following is extracted from the abstract of the MMT protocol specification published on the internet by the IETF as draft-boudani-mpls-multicast-tree-06.txt and is incorporated herein by reference: "A multicast router should [track] forwarding state [information] for every multicast tree passing through it. The number of forwarding states grows with the number of [multicast] groups. [A] new approach, the MPLS Multicast Tree (MMT), [is presented] which utilizes MPLS LSPs between multicast tree branching node routers in order to reduce forwarding state[tracking] and enhance scalability. In [accordance with the presented] approach only routers that are acting as multicast tree branching node routers for a [multicast] group need to [track and store] forwarding state[s] for that [multicast] group. All other non-branching node routers simply forward data packets by traffic engineered unicast routing using MPLS LSPs." The MMT scheme uses IP Multicast forwarding at branching router network nodes and MPLS LSPs to transport IP packets between branching nodes. In essence physical multicast trees are mapped by the MMT protocol into a higher level multicast tree having only branching router network nodes tracking forwarding states which establish MPLS LSPs between themselves via non-branching router network nodes which do not track forwarding states.

The MMT solution has the following deficiencies preventing the use thereof in deploying internet broadcast TV services:

MMT concerns dynamic IP multicast groups. In accordance with the proposed MMT scheme, MMT compliant connectivity is provisioned by an NIMS. As a multicast group is defined for each content channel, each channel requires its own multicast forwarding states to be tracked at every branching router network node. However, group membership is not handled quickly enough at edge router network nodes 110-E. The MMT requires IGMP and PIM to relay the subscriber membership join and prune request to the NIMS. The NIMS calculates the new multicast tree, re-constructs the multicast tree by instructing branching router network nodes to establish LSPs, and updates IP forwarding states for the IP multicast group before each subscriber's membership change request is executed. A significant delay is therefore incurred between the subscriber's decision to join a particular channel and the time the subscription to that channel is completed.

As MMT re-calculates the multicast tree for each group membership change, MMT does not lend itself to the use of computation intensive tree determination algorithms such as the minimum-cost Steiner trees. Therefore practical MMT deployments cannot employ the Steiner multicast tree topology nor benefit from potential resource utilization optimizations.

As the number of multicast groups increases, the memory required at each branching router node to store the forwarding state information becomes very large. While the number of router network nodes tracking forwarding states is reduced, the MMT protocol does not reduce the forwarding state tracking burden for branching network nodes.

All dynamic IP Multicast protocols in general, and in particular PIM-SSM, share the above mentioned deficiencies with MMT.

Static IP Multicast schemes propose the use of static multicast trees for delivery of IP Multicast packets from a source network node to all network perimeter nodes using IP multicast routing. Static IP Multicast schemes propose preventing dynamic group membership changes in the network core beyond the first hop to deliver group membership change requests to a membership change processing entity. IGMP is used to communicate and process group membership changes at the first hop.

Whether dynamic or static, OSI Layer-3 IP Multicast-based proposals require a lot of stack processing for each packet conveyed. Stack processing negatively affects high bandwidth broadcast over packet switched communications networks particularly because of the large number of packets conveyed. In particular the more involved the packet processing at intermediary network nodes, the more delay and jitter is incurred by the packet stream. Large delays and jitter further impact the quality of streaming services, and to a lager extent high bandwidth services.

In provisioning Internet TV broadcast services, service providers would prefer a manageable multicast solution characterized by a minimum provisioning cost and a predictable performance in terms of multicast bandwidth, delay, and jitter. Changes to group memberships need to be executed as quickly as possible in response to the subscriber's selection. For scalability reasons, it is desired that the least amount of forwarding state information be stored at router network nodes 110 in the provider network 100. There therefore the above mentioned issues need to be addressed.

### Summary of the invention

In accordance with an aspect of the invention, a method for provisioning high bandwidth multi-channel multimedia broadcast services over a managed packet switched communications network infrastructure is provided. A multicast tree is provisioned in the core of the managed communications network between an edge switching node associated with a super-head end content source node and a multitude of distribution edge switching nodes. Each multimedia channel is distributed to the multitude of distribution edge switching nodes over the provisioned multicast tree. Each distribution edge switching node intercepts membership change requests received from destination nodes in the distribution portion of the communications network. Each membership change request specifies a channel. The edge switching node establish, over the distribution portion of the communications network, a multicast tree branch between the distribution edge switching node and the destination node from which a join membership change request was received and forwarding multimedia content of the specified channel over the established multicast tree branch. And, the edge switching node tears down the multicast tree branch between the distribution edge switching node and the destination node from which a prune membership change request was received. The interception and processing of membership change requests at distribution edge switching nodes reduces delays associated with establishing multicast tree branches to destination nodes.

In accordance with another aspect of the invention, a system for provisioning high bandwidth multi-channel multimedia broadcast services over a managed packet switched communications network infrastructure is provided. A network management system is employed for provisioning a multicast tree over managed infrastructure in the core of the managed communications network between an edge switching node associated with a super-head end content source node and a multitude of distribution edge switching nodes. Distribution edge switching nodes are employed for intercepting membership change requests issued by destination nodes in the distribution portion of the communications network. Each membership change request specifies a channel. A multicast tree branch is established, over the distribution portion of the communications network, between the distribution edge switching node and the destination node from which a join membership change request was received and multimedia content of the specified channel is forwarded over the established multicast tree branch. The multicast tree branch is torn down between the distribution edge switching node and the destination node in response to a prune membership change request received from the destination node. And, at least one source filter is employed by distribution edge switching nodes for filtering out illegitimate membership change requests from destination network nodes.

In accordance with yet another aspect of the invention, a multicast connectivity provisioning application for provisioning high bandwidth multi-channel multimedia broadcast services over a managed packet switched communications network infrastructure is provided. Distribution edge switching node selection means are employed for selecting a multitude of distribution edge switching nodes adapted to selectively forward multimedia content to associated destination nodes. Retrieval means are employed for retrieving service provisioning, network provisioning, and connectivity information from one of a network management repository and a user interface. A multicast tree heuristics selector is employed for selecting multicast tree determination heuristics. And, multicast tree determination means are employed for determining a multicast tree between an edge switching node associated with a super-head end content source node and the multitude of distribution switching nodes in accordance with the selected multicast tree heuristics based on the service provisioning, network provisioning, and connectivity information.

One of the advantages of the proposed solution, includes avoiding the use of complex IP multicast routing protocols to employ simpler and more reliable network nodes while yielding an improved manageability.

Another advantage of the proposed solution, includes employing multicast tree topologies such as, but not limited to, minimum cost Steiner trees previously not deployable due to intensive computational requirements associated therewith. Substantially static multicasting techniques are proposed wherein a multicast tree having desired attributes, such as a delay constrained Steiner multicast tree, is computed and established to deliver strict performance and QoS requirements.

As the proposed solution decouples group membership from the multicast tree structure in a provider domain, a further advantage is derived from allowing edge network nodes to quickly handle group membership changes at the network periphery without affecting the multicast network architecture provisioned in a service provider's network between the source and edge network nodes.

A further advantage is derived from a high degree of scalability provided by the aggregation of forwarding state information for multiple internet multimedia broadcast content channels as multiple multicast channels share the same multicast tree.

In accordance with a further advantage, a strict Layer-2 Internet multimedia broadcast solution is provided including versatile means for delivering content.

In accordance with yet another advantage, tracking forwarding state information for multicast groups at core router network nodes may not be necessary at all as Ethernet broadcast within established Virtual Private LAN may provide sufficient filtering, thereby achieving multicast with broadcast in a constrained broadcast domain! The Virtual Private LAN connectivity information specified at each core network node includes in the port membership specification, for each multicast group, all ports corresponding to multicast tree links to the upstream parent network node and to downstream child network nodes.

### Brief description of the drawings

The features and advantages of the invention will become more apparent from the following detailed description of the exemplary embodiment(s) with reference to the attached diagrams wherein:
FIG. 1 is a schematic diagram showing interconnected data network elements provisioning multicast connectivity having a broadcast architecture based on a shortest path source tree;
FIG. 2 is a schematic diagram showing network architecture including communications network elements theoretically provisioning multicast connectivity having a Steiner tree broadcast architecture; and
FIG. 3 is a schematic diagram showing, in accordance with the exemplary embodiment of the invention, interconnected communications network elements provisioning multicast connectivity for high bandwidth multi-channel content broadcast.

It will be noted that in the attached diagrams like features bear similar labels.

### Detailed description of the embodiments

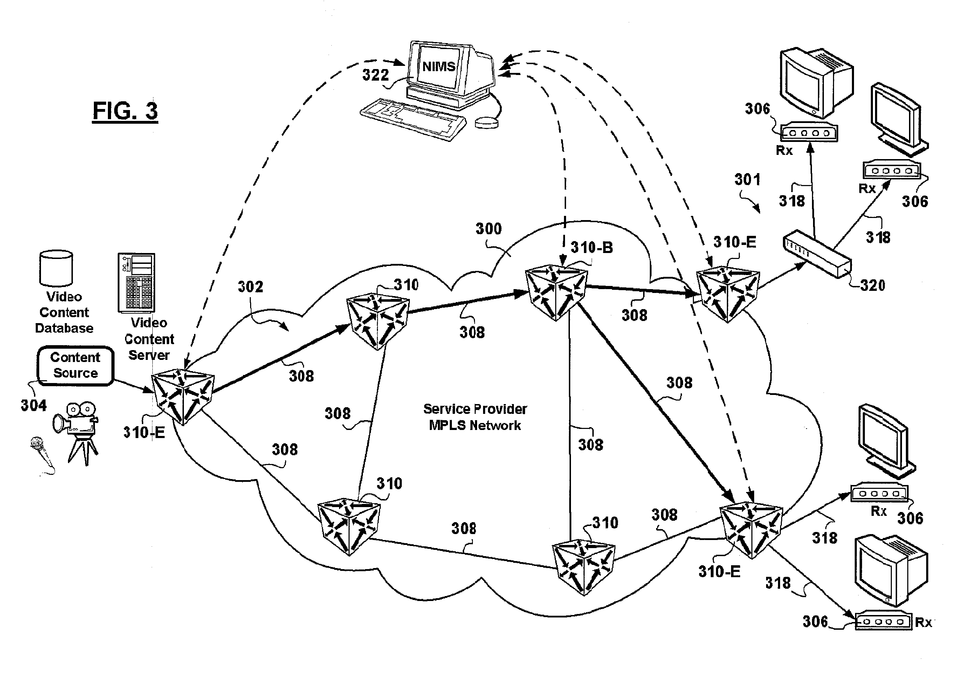

In accordance with an exemplary embodiment of the invention, a multicast connectivity provisioning method is provided for reducing the delay in establishing new tree branches to new members of a multicast group. In particular, in provisioning high bandwidth internet TV broadcast services, multi-channel video content is distributed from a super-head end content source 304 over a service provider's network 300 shown in FIG. 3, to multiple distribution edge router network nodes 310-E. The proposal applies equally to implementations in which a multicast group is defined: for each video content channel, for the aggregate of all video content channels, and for a subgroup of video content channels. The availability of multi-channel content at distribution edge router network nodes 310-E eliminates the need to provision bandwidth across the provider communication network 300 in real-time in response to each multicast group membership join request. Furthermore the availability of multi-channel content at each distribution edge router network node 310-E renders unnecessary the propagation of multicast group membership join/prune requests to network nodes 310 participating in the multicast tree 312.

In accordance with the exemplary embodiment of the invention, edge router network nodes 310-E process all join/prune requests on edge. Processing all join/prune requests on edge, requires forwarding state tracking for each next-hop leading to a destination network node 306 only in a single router network node 310-E, and in particular typically only in the edge router network node 310-E with which the destination network node 306 typically interacts for general access to the service provider's network 300. In accordance with the proposed multicast architecture, each new multicast tree branch is established only over the distribution portion 301 of the service provider's network 300 which typically includes a customer loop 318. Therefore, the provision of each channel to each edge router network node 310-E and the processing of join/prune requests on edge, enables very fast access times to any content channel thereby supporting channel surfing. For certainty, the invention is not limited to deployments in which destination network nodes 306 connect directly to a distribution edge router network node 310-E via a dedicated customer loop 318, other exemplary deployments make use of auxiliary aggregation/deaggregation equipment 320.

In accordance with the exemplary embodiment of the invention, distribution edge router network nodes 310-E (320) only keep track of forwarding state information regarding dependent destination network nodes 306 served. Therefore the storage of forwarding state information is distributed over all participating edge router network nodes 310-E and the forwarding state information is stored only once. Therefore, forwarding state information storage requirements are reduced for all router network nodes 310 in the core of the service provider's network 300.

It is recognized that the proposal to distribute every channel, within a multicast aggregate, also know as a channel bundle to each participating edge router network node 310-E, requires high bandwidth utilization over interconnecting links 308 in the service provider's network 300.

In accordance with the exemplary embodiment of the invention, the high bandwidth utilization over interconnecting links 310 is addressed by employing optimum multicast trees such as, but not limited to, the Steiner multicast trees. A service provider operated Network Management System (NMS) 322, cognizant of the underlying service provider's managed communication network architecture, is configured with multicast group membership information regarding edge router network nodes 310-E, computes an exemplary minimum cost Steiner multicast tree for each channel bundle between the edger router network node 310-E associated with the super-head end network node 304 and the distribution edge network nodes 310-E associated with the destination network nodes 306, and configures only branching core router network nodes 310 in the service provider's network 300 with multicast forwarding state information corresponding to the channel bundle. The NMS 322 is used for operations management functions, tracking network element states and interconnecting link states. As multi-channel content is being conveyed from the super-head end content source 304 to every participating edge router network node 310-E, destination network node 306 multicast group join and prune requests are handled at the edge router network nodes 310-E and are therefore not propagated across the service provider's network 300.

Exemplary implementations are envisioned wherein, a multicast group corresponds to a subgroup (bundle) of video content channels, for example users subscribe to a premium sports channel package in addition to the basic channel package. In accordance with exemplary deployments, a channel may be part of more than one bundle.

Prior to the provisioning of the high bandwidth multi-channel internet TV broadcast services, the NMS 322 is provided with characteristics of the multi-channel content to be provisioned. Without limiting the invention, the NMS 322 is provided with the following information for each channel bundle: the aggregate transport bandwidth necessary to provision all the channels in the channel bundle, and the edge network node identifier of the edge router network node 310-E associated with the super-head end source network node 304. Depending on the manner in which the content stream of each channel is provided to the service provider network, the channel identifiers of the channels in each channel bundle may also be provided to the NMS 322. For example, in accordance with a VPLS implementation, described in more detail herein below, each channel content stream to be uploaded by the source network node 304 via an attachment circuit and the bundling information is used to group attachment circuits together.

In accordance with the exemplary embodiment of the invention, the NMS 322 either uses a routing protocol or is configured with information regarding which subscriber destination network node 306 is associated with which multicast group edge router network node 310-E. Subscription information is used to specify associations between destination network nodes 306 and channel bundles. The NMS 322 computes the minimum cost Steiner multicast trees based on multicast group membership information. The computation of the minimum cost Steiner multicast tree at the NMS 322 also takes into account packet switching capacities at communications network nodes 310 and transport bandwidth reservations on interconnecting links 108. Depending on the subscriber / edge router network node associations and subject to bandwidth being available in the core of the service provider's network 300, the computed multicast tree may be used by multiple channel bundles. For large subscriber communities associated with edge router network nodes 306, statistically all channel bundles are provisioned to each participating edge router network node 310-E. The computation of the minimum cost Steiner multicast tree at the NMS 322 reduces multicast tree computation requirements at core router network nodes 310 while reducing resource utilization in the service provider's communication network 300.

The substantially static nature of the centrally provisioned multicast tree enables managed manual optimization of traffic routing wherein operations management personnel interacts with an exemplary multicast tree provisioning application tool executing in a network management and provisioning context as described herein below.

It is recognized that a large number of packets is necessary to convey the entire multi-channel video content. In accordance with the exemplary embodiment of the invention, the processing of the large number of packets is reduced by provisioning OSI Layer-2 multicast tunnel connectivity. An exemplary OSI Layer-2 multicast tunnel connectivity may be derived from the use of the Virtual Private LAN Service (VPLS) technology developed for providing OSI Layer-2 connectivity across a provider communications network between disparately connected Local Area Networks (LANs). VPLS uses OSI Layer-2 Ethernet switching techniques for forwarding OSI Layer-2 Ethernet encapsulated packets between geographically disparate LANs which are members of the same VPLS context, and MultiProtocol Label Switching (MPLS) for Ethernet packet transport between the Ethernet switching nodes across a communications network. By employing VPLS for high bandwidth content transport in the service provider's network 300, not only is stack processing reduced for each packet, but also the use of VPLS packet forwarding techniques together with the centralized multicast tree provisioning at the NMS 322 reduces reliance on the routing functionality of the network nodes 310 in provisioning high bandwidth multi-channel streaming video services. While, routing functionality at edge network nodes 310-E is still desired for functionality other than multicast tree provisioning, the network nodes 310 will be referred to hereinafter, without limiting the invention thereto, as core switching network nodes 310 and distribution edge switching network nodes 310-E respectively. It is typical for a larger number of network nodes to be considered in establishing the Steiner multicast tree as there are more switching network nodes 310 than routers in a typical communications network 300. The larger number of switching network nodes 310 is desired particularly as core switching network nodes 310 tend to operate at higher bandwidths.

VPLS packet transport techniques lend themselves very well to the proposal presented herein as VPLS packet transport employs pseudo-wires in the core of the service provider network 300 and attachment circuits over the distribution portion 301 thereof. A VPLS pseudo-wire is in essence an Ethernet tunnel typically provisioned as a Layer-2 MPLS Label Switched Path (LSP). The use of the MPLS protocol at Layer-2 provides a certain degree of independence from the transport technology employed by the physical service provider's network infrastructure while reducing stack processing of packets. After the NMS 322 determines the multicast tree, VLPS pseudo-wires are provisioned along the determined multicast tree between branching core switching nodes 310 in the multicast tree and between branching core switching nodes 310 and edge switching nodes 310-E. The NMS 322 provides branching core switching node 310 with sub-tree connectivity information corresponding to the multicast tree, for each channel bundle, and the desired bandwidth to be reserved for the Ethernet tunnels between branching/edge switching nodes 310. The invention is not limited to the use of the Steiner tree, in fact the NMS 322 may determine any multicast tree for provisioning VPLS pseudo-wires along therewith in the core of the service provider's network 300.

When MPLS is used to provide pseudo-wire connectivity, the MPLS label is stripped off each packet at each core branching switching node 310, and the packet is replicated in accordance with the specified sub-tree connectivity information updated by the NMS 322 for each multicast group.

While the use of VPLS technology lends itself to the proposal described herein, the invention is not limited to the use of VPLS techniques. The centralized multicast tree provisioning proposed enables employing other forms of Layer-2 packet tunnels. As described above, at each edge or branching switching node 310 where the LSP is terminated, the MPLS shim header and lower layer headers are stripped and the encapsulated Ethernet packet is switched. The manner in which Ethernet packet is switched may also be similar to the operation of a typical standard VLAN capable Ethernet switch, where the switching function would inspect the Ethernet header and would yield a group (one or more) of egress MPLS LSPs, a group of Layer-2 tunnels, or a group of IEEE 802.1Q VLAN ports. The Ethernet packet is replicated and each copy is prepended with an MPLS shim header corresponding to the egress LSP or Layer-2 tunnel identified, and sent out through corresponding egress ports after prepending necessary lower layer headers. Similarly, for each egress Ethernet VLAN port identified, the Ethernet packet is replicated and sent out therethrough after prepending necessary lower layer headers.

However, as the VPLS transport protocol provides interoperability with most physical transport technologies employed in the distribution portio n 301 of the network, an abstraction is made of the transport technology employed at the physical layer in the distribution portion 301 of the service provider's network. In view of the use of the centrally provisioned MPLS Layer-2 Ethernet tunnels, the edge switching nodes 310-E, or adjunct network elements associated therewith, are the only network nodes requiring compliance with the VLPS transport protocol which greatly reduces deployment costs in implementing the proposed solution.

In accordance with the exemplary embodiment of the invention, a multicast services provisioning tool is provided. Exemplary implementations of the provisioning tool includes an application executing in an operations management context associated with the NMS 322, the application facilitating the creation of an effective VPLS network for high-bandwidth multi-channel internet TV broadcast.

In an autonomous mode of operation, the provisioning tool is configured with the identity of the plurality of content distribution edge switching nodes 310-E that provides access to the Internet TV broadcast service to at least one subscriber associated with a corresponding destination network node 306. In a manual mode of operation, operations management personnel interacts with a human machine interface to: retrieve a list of edge switching nodes 310-E, and select a group of edge switching nodes 310-E. The NMS 322 will typically provide a schematic Layer-2 network map, having a schematic representation much like the one shown in FIG. 3, from which operations management personnel can select the edge switching nodes 310-E. The selected distribution edge switching nodes 310-E together with the edge switching node 310-E associated with the super-head end source network node 304 are made members of a specified multicast group. As multicast groups are defined for each channel bundle, the process is performed in respect of each channel bundle.

Either via a default setting in the autonomous case, or via express operations management personnel selection, a multicast tree type such as, but not limited thereto, Shortest Path Source Tree (SPT), Core-Based Tree (CBT), Steiner Tree (ST), etc. is selected.

The multicast tree between the multicast group members is computed based on the heuristics of the selected multicast tree type taking into account network provisioning information (node packet switching capacities and transport bandwidth reservations on interconnecting links) available to the NMS 322. Given the multitude of active network nodes, the network interconnection topology, capacities of interconnecting links, and the multicast group member edge switching network nodes 310-E, the heuristics of the selected multicast tree type are applied to determine a multicast tree. In the process, the multitude of switching nodes in the service provider's network 300 are categorized as "on-tree" switching nodes 310 and "off-tree" nodes. The on-tree switching nodes 310 can be categorized as either "branching" 310-B or as "non-branching" switching nodes 310. The multicast tree determination process also determines sub-tree connectivity information for branching switching nodes 310-B.

In accordance with the exemplary embodiment of the invention, due to the intended substantially static nature of the multicast tree to be provisioned in the service provider's communications network 300, operation management personnel is further provided with means for manual multicast tree construction and/or editing. Operation management personnel may select switching nodes 310 and change their on-tree/off- tree designation, as well the branching/non- branching designation. Further operation management personnel is provided with means for editing sub-tree connectivity information.

Based on the determined multicast tree, the NMS 322 configures branching core switching node switching entries with the sub-tree connectivity information, and sends instructions for provisioning MPLS LSPs between edge switching nodes 310-E and the branching core switching nodes 310, and between pairs of branching core switching nodes 310-B (it is possible for a tree branch to extend between two edge switching nodes 310-E as shown in FIG. 3, in which case an edge switching node 310-E is also a branching switching node 310-B). The provisioned LSP capacities correspond to channel bundle aggregate capacities.

In the process, the NMS 322 communicates to branching core switching nodes 310-B their participation in a specific Virtual Private LAN corresponding to the multicast group provisioned over the computed multicast tree. Each branching switching network node 310-B is configured with sub-tree connectivity information for the internet TV broadcast service.

As edge switching nodes 310-E do not forward multicast group membership join/prune requests from destination network nodes 306, the NMS 322 does not provide sub-tree connectivity information for edge switching nodes 310-E unless the edge switching nodes 310-E are also branching nodes 310-E for the core portion of the multicast tree. In accordance with an exemplary implementation of the exemplary embodiment of the invention, the edge switching nodes 310-E handle group membership join/prune requests from associated subscribers (IGMP snooping is an example), replicate channel packets, and transmit channel packets to legitimate receivers 306. The Ethernet switching tables at edge switching nodes 310-E are built automatically via Ethernet address learning and aging functionality along with IGMP (Internet Group Membership Protocol) snooping functionality in a manner similar to standard compliant Ethernet switching functionality. Implementations are envisioned wherein edge switching nodes 310-E implement traffic filters to filter out illegitimate traffic from receivers.

VPLS functionality is also employed at edge switching nodes 310-E in connecting pseudo-wires on the core side, with attachment circuits on the distribution side which may include protocol conversion.

It is noted that the necessary processing at a branching switching network nodes 310-B is strikingly similar to the processing performed by currently deployed VPLS branching routers with two main exceptions:

The first exception is that current VPLS/HVPLS implementations specify only an Ethernet switching function between customer domains connected via attachment circuits and provider domains connected via pseudo wires. In accordance with an exemplary implementation of the exemplary embodiment of the invention, Ethernet packet switching using an Ethernet VLAN switching table is proposed for connecting provider domain nodes via pseudo wires.

The second exception relates to the fact that current VPLS implementations rely on a Split Horizon mechanism to avoid duplication of broadcast traffic in a loop topology. In accordance with the exemplary embodiment of the invention, a loop-less multicast tree topology is employed as provided by the NMS 322 preventing duplication of broadcast traffic without employing Split Horizon techniques.

For greater certainty, in accordance with the exemplary embodiment of the invention, multicast Ethernet packets may, without limiting the invention, be either sent to selected VPLS ports by consulting an Ethernet VLAN multicast forwarding table; or broadcasted to all VPLS ports, MPLS LSPs, other Layer-2 tunnels, or VLAN ports, if a multicast forwarding state is not present. Such proposed functionality is compatible with Ethernet switching functionality not employing Split Horizon - the compatibility enabling deployment on a large variety of communications network equipment.

Extensive reference was made hereinabove to high-bandwidth multi-channel internet TV broadcast services. It is understood that the multi-channel aspect of the invention is not limited to TV content channels only, content channels being understood to contain multimedia content (streaming video, streaming audio, streaming text, data, messaging etc.)

Extensive reference was made hereinabove to the use of the MPLS protocol in providing packet transport in support of the high-bandwidth multi-channel internet multimedia broadcast services. It is understood that in practice the Generalized MPLS (GMPLS) protocol is typically employed, GMPLS extending the label switching functionality in employing data communications equipment physically provisioning actual OSI Layer-1 connectivity; equipment such as, but not limited to: Time Division Multiplexing (TDM) multiplexers, Synchronous Optical NETwork (SONET) Add/Drop Multiplexers (ADMs), optical (lambda) switches, spatial switches, etc.

The accompanying diagrams and the above description refer to destination network nodes 306 being associated with edge switching nodes 310-E. It is understood that a destination network node 306 may not be associated phys ically with the subscriber loop 318, a myriad of communications network equipment, including, but not limited to: Customer Premise Equipment (CPE) high speed modems, CPE routers, proxy servers, firewalls, LAN switches, etc. (not shown) may be located in the Internet access path. It is further understood that the edge switching nodes 310-E may in fact receive multicast group membership join/prune requests from CPE routers, proxy servers, firewalls, etc. which send the join/prune requests on behalf of destination network nodes 306.

Moreover, in the above description, the operation of edge router network nodes 310-E included the aggregation of uploaded user traffic for transport over the service provider's communication network 300 and the deaggregation of download traffic for distribution to respective destination network nodes 306. In accordance with another exemplary implementation of the exemplary embodiment of the invention, the edge switching nodes 310-E do not perform aggregation/deaggregation functionality and the distribution portion 301 of the service provider communication network 300 includes aggregation/deaggregation equipment 320. In accordance with such a deployment, multicast group membership join/prune requests are processed at the aggregation/deaggregation equipment 320 in accordance with dynamic multicast techniques. The aggregation/deaggregation equipment 320 replicates channel packets, and transmits channel packets to legitimate receivers 306. Implementations are envisioned wherein traffic filters to filter out illegitimate traffic from receivers 306 are implemented by the aggregation/deaggregation equipment 320.

The embodiments presented are exemplary only and persons skilled in the art would appreciate that variations to the above described embodiments may be made without departing from the spirit of the invention. The scope of the invention is solely defined by the appended claims.

## Claims

1. A method for provisioning broadcast services over a managed packet switched communications network infrastructure, the method comprising:
a. provisioning a multicast tree in the core of the managed communications network between an edge switching node associated with a super-head end content source node and a plurality of distribution edge switching nodes;
b. distributing a channel to the plurality of distribution edge switching nodes over the provisioned multicast tree;
c. each distribution edge switching node intercepting membership change requests received from destination nodes in the distribution portion of the communications network, each membership change request specifying a channel;
d. the edge switching node establishing, over the distribution portion of the communications network, a multicast tree branch between the distribution edge switching node and the destination node from which a join membership change request was received and forwarding content of the specified channel over the established multicast tree branch; and
e. the edge switching node tearing down the multicast tree branch between the distribution edge switching node and the destination node from which a prune membership change request was received,
the interception and processing of membership change requests at distribution edge switching nodes reducing delays associated with establishing multicast tree branches to destination nodes.

2. The method claimed in claim 1, wherein provisioning broadcast services includes provisioning high bandwidth multi- channel multimedia content.

3. The method claimed in claim 2, wherein each multimedia channel is constituent of a channel bundle, the method comprising distributing each multimedia channel bundle to the plurality of distribution edge switching nodes over the provisioned multicast tree.

4. The method claimed in claim 2, wherein each content channel is constituent of at least one channel bundle and distribution edge switching nodes hold information regarding channel bundles, and information regarding user subscriptions to channel bundles, the method comprising selectively establishing the multicast tree branch to the destination node, if the user associated with the destination network node subscribes to a channel bundle including the specified channel.

5. The method claimed in claim 4, further comprising replicating channel content to legitimate subscriber associated destination nodes.

6. The method claimed in claim 1, further comprising source filtering packets received from destination network nodes at corresponding distribution edge switching nodes to filter out illegitimate traffic.

7. The method claimed in claim 2, wherein prior to provisioning the multicast tree the method further comprises centrally determining the multicast tree based on: a specification of the bandwidth required to convey the multi-channel multimedia content, the network address of the edge switching node associated with a super-head end content source node, the plurality network addresses of the plurality of distribution edge switching nodes.

8. The method claimed in claim 7, wherein in centrally determining the multicast tree, the method further comprises:
a. obtaining network provisioning and connectivity information;
b. selecting a multicast tree heuristics specification; and
c. computing the multicast tree based on the specified multicast tree heuristics.

9. The method claimed in claim 8, wherein selecting the multicast tree heuristics specification includes selecting of a Steiner tree, a shortest path source tree, and a core based tree.

10. The method claimed in claim 8, wherein obtaining network provisioning and connectivity information, the method comprises:
a. obtaining managed communications network infrastructure connectivity information;
b. obtaining status information regarding managed network elements and interconnecting links; and
c. obtaining packet switching capacities of managed switching nodes and transport bandwidth reservations on the interconnecting links.

11. The method claimed in claim 10, wherein obtaining one of the specification of the bandwidth required to convey the multi-channel multimedia content, the network address of the edge switching node associated with the super-head end content source node, the plurality network addresses of the plurality of distribution edge switching nodes, the connectivity information, status information, packet switching capacities of managed switching nodes, and transport bandwidth reservations on managed interconnecting links, the method further comprises one of consulting network management repository and receiving input from a user interface.

12. The method claimed in claim 8, wherein obtaining network provisioning and connectivity information, the method comprises: listening to the Interior Gateway Routing Protocol messages exchanged in the managed communications network.

13. The method claimed in claim 7, wherein centrally determining the multicast tree, the method further comprises:
a. dividing the plurality of managed switching nodes in the managed communications network into a group of on-tree switching nodes and a group off-tree switching nodes; and
b. dividing the group of on-tree switching nodes into a subgroup of branching switching nodes and a subgroup of non-branching switching nodes.

14. The method claimed in claim 13, wherein provisioning the multicast tree in the core of the managed communications network between an edge switching node associated with a super-head end content source node and a plurality of distribution edge switching nodes, the method further comprising:
a. configuring each on-tree branching node with sub-tree connectivity information in accordance with the determined multicast tree; and
b. provisioning OSI Layer-2 tunnels between pairs of on-tree branching switching node and edge switching nodes at transport capacities corresponding to the aggregate transport bandwidth necessary to convey the multi-channel multimedia content.

15. The method claimed in claim 14, wherein configuring a branching network node with sub-tree connectivity information includes providing the branching switching node with a switching table.

16. The method claimed in claim 15, wherein the switching table includes an Ethernet VLAN switching table for switching multicast packets between LSPs and between Ethernet links and LSPs.

17. The method claimed in claim 14, wherein the Virtual Private LAN Service (VPLS) is employed to provision multicast tree connectivity, the method further comprising:
a. configuring each on-tree branching node with VLSP sub-tree connectivity information;
b. provisioning VPLS pseudo-wires between pairs of on-tree branching switching node and edge switching nodes; and
c. provisioning VPLS attachment circuits between the super-head end source node and the associated edge switching network node, and between each distribution edge switching node and each destination node associated therewith,
the provisioning of VPLS pseudo-wires in accordance with the computed multicast tree reducing the need to employ Split Horizon techniques.

18. The method claimed in claim 14, wherein provisioning OSI Layer-2 tunnels between pairs of on-tree branching switching node and edge switching nodes, the method includes provisioning OSI Layer-2 Generalized MultiProtocol Label Switching (GMPLS) Label Switched Paths (LSPs) therebetween.

19. The method claimed in claim 18, further comprising:
a. receiving at a branching switching node on the multicast tree, a packet from a GMPLS LSP;
b. terminating the packet's LSP header; and
c. Ethernet multicasting the packet to egress ports specified in the sub-tree connectivity information.

20. The method claimed in claim 19, wherein the Ethernet multicasting includes one of encapsulating the packet as an MPLS packet for egress ports associated with MPLS LSPs in the multicast tree and prepending the packet with an Ethernet VLAN header for IEEE 802.1Q VLAN egress ports.

21. A system for provisioning broadcast services over a managed packet switched communications network infrastructure, the system comprising:
a. a network management system for provisioning a multicast tree over managed infrastructure in the core of the managed communications network between an edge switching node associated with a super-head end content source node and a plurality of distribution edge switching nodes;
b. distribution edge switching nodes for:
i. intercepting membership change requests issued by destination nodes in the distribution portion of the communications network;
ii. establishing, over the distribution portion of the communications network, a multicast tree branch between the distribution edge switching node and the destination node from which a join membership change request was received and forwarding multimedia content of the specified channel over the established multicast tree branch; and
iii. tearing down the multicast tree branch between the distribution edge switching node and the destination node from which a prune membership change request was received; and
c. at least one source filter employed by distribution edge switching nodes for filtering out illegitimate membership change requests from destination network nodes.

22. The system claimed in claim 21, wherein in the provisioning of broadcast services includes provisioning of high bandwidth multi-channel multimedia content, intercepting membership change requests comprising intercepting membership change requests specifying a channel.

23. The system claimed in claim 21, further comprising a network management repository for storing broadcast service provisioning, network provisioning and connectivity information.

24. The system claimed in claim 22, wherein the network management repository stores one of a specification of the bandwidth required to convey the multi-channel multimedia content, the network address of the edge switching node associated with the super-head end content source node, a plurality network addresses of the plurality of distribution edge switching nodes, status information, packet switching capacities of managed switching nodes, and transport bandwidth reservations on managed interconnecting links.

25. The system claimed in claim 22, further comprising a user interface for specifying broadcast service provisioning, network provisioning and connectivity information.

26. The system claimed in claim 25, wherein the user interface is used for specifying one of the bandwidth required to convey the multi-channel multimedia content, the network address of the edge switching node associated with the super-head end content source node, a plurality of distribution edge switching nodes, status information, packet switching capacities of managed switching nodes, and transport bandwidth reservations on managed interconnecting links.

27. The system claimed in claim 21, wherein provisioning the multicast tree the system further comprising means for obtaining heuristics for determining a multicast tree.

28. The system claimed in claim 27, further comprising means for determining the multicast tree.

29. The system claimed in claim 28, further comprising messaging means for configuring branching switching nodes on the determined multicast tree with sub-tree connectivity information; and messaging means for provisioning OSI Layer-2 tunnels between pairs of on-tree branching switching node and edge switching nodes at transport capacities corresponding to the aggregate transport bandwidth necessary to convey the content.

30. A multicast connectivity provisioning application for provisioning broadcast services over a managed packet switched communications network infrastructure, the application comprising:
a. distribution edge switching node selection means for selecting a plurality of distribution edge switching nodes adapted to selectively forward content to associated destination nodes;
b. retrieval means for retrieving service provisioning, network provisioning, and connectivity information from one of a network management repository and a user interface;
c. a multicast tree heuristics selector for selecting multicast tree determination heuristics; and
d. multicast tree determination means for determining a multicast tree between an edge switching node associated with a super-head end content source node and the plurality of distribution switching nodes in accordance with the selected multicast tree heuristics based on the service provisioning, network provisioning, and connectivity information.

31. The application claimed in claim 30, wherein the broadcast services include high bandwidth multi-channel multimedia broadcast services.

32. The application claimed in claim 30, wherein the retrieval means further comprises one of a distribution edge switching node list retrieval routine for accessing the network management repository to retrieve a list of distribution edge switching node list, and OSI Layer-2 map display component displaying for selection a plurality managed switching nodes on the user interface.

33. The application claimed in claim 31, wherein each multimedia channel is constituent of at least one channel bundle, the application further comprising means for provisioning each channel bundle over the determined multicast tree.

34. The application claimed in claim 30, wherein the multicast tree heuristics selector is employed in selecting one of shortest path source tree, core base tree, and Steiner tree heuristics.

35. The application claimed in claim 30, further comprising messaging means for configuring branching switching nodes on the determined multicast tree with sub-tree connectivity information; and messaging means for provisioning OSI Layer-2 tunnels between pairs of on-tree branching switching node and edge switching nodes at transport capacities corresponding to the transport bandwidth necessary to convey content.
